# EUROPEAN PATENT APPLICATION

(11) **EP 4 287 070 A1**
(43) Date of publication of application: **06.12.2023**
(21) Application number: 22305817.3
(22) Date of filing: 03.06.2022
(51) Int. Cl.: G06K 19/07, G06K 19/077

(54) **METHOD FOR OPERATING A CARD**

(71) Applicant: THALES DIS FRANCE SAS, 92190 Meudon (FR)
(72) Inventor: PALADJIAN, Pierre, 13190 ALLAUCH (FR); FAVREAU, Valentin, 92130 ISSY LES MOULINEAUX (FR)
(74) Representative: Grevin, Emmanuel

(57) **Abstract**

The invention is a method for operating a predefined treatment in a card (10) comprising a body (20) and a communication interface (15) able to operate according to ISO/IEC 7816 standard. A system comprises the card and a bio-battery removably bonded to an outer surface (22) of the body. The battery comprises two connectors (41, 42) placed opposite two connection pads (16, 17) belonging to the communication interface. The system comprises a moveable component (50) preventing the battery to power the card when placed in an initial position. The method comprises the following steps:
the battery powers the card using a boot protocol different from those specified by ISO/IEC 7816 standard as soon as the moveable component is placed in a triggering position; and
the card performs a detection that the physical communication interface is powered using said boot protocol and starts said predefined treatment only in case of successful detection.

## Description

### (Field of the invention)

The present invention relates to methods for operating a card. It relates particularly to methods of method for operating a predefined treatment in a smart card.

### (Background of the invention)

Smart cards are portable small devices comprising a memory, a microprocessor and an operating system for computing treatments. They may comprise services applications like Payment, Access or Telecom applications. Such smart cards may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which provides them with electric power either in contact mode or contactless mode.

Contact smart cards are designed to communicate according to at least one contact protocol like ISO/IEC7816 T=0 or T=1 communication protocols. Contactless smart cards are designed to communicate according to at least one contactless protocol.

### (Summary of the Invention)

Most of the smart cards does not embed their own energy source and relies on the power provided by a coupled reader device. With the notable exception of SIM cards, most smart cards are not powered for most of the time because they are not in close enough proximity to a reader device capable of supplying them with power.

Moreover, for a large number of these cards (such as payment cards, transit tickets or Identity documents) the devices capable of supplying them with energy are located in a limited number of places (such as Automatic Teller Machine, Point-Of-Sale Terminal, an access point to a transport network, or and identity control device.

In some cases, the genuine user who received their card is supposed to operate one or more initial processing operations on the card before using the card with conventional infrastructures. For instance, the user may enroll their fingerprint data in a payment card before using it for payment transactions.

Operating one or more initial processing operations requires the card to be powered. Since the user usually does not have a reader device at home, some card issuers provide the user with a suitable reader device. Unfortunately, such provided reader device are often used only once, which makes them expensive in view of the service rendered and poses the problem of collecting and recycling their hardware components.

There is need to allow a user to operate at least one initial processing operation on a smart card.

The invention aims at solving the above mentioned technical problem.

An object of the present invention is a system comprising a card and a battery. The card comprises a body and a physical communication interface that is able to operate according to ISO/IEC 7816 standard. The battery is a bio-battery that is removably bonded to an outer surface of card body. The battery comprises two connectors placed opposite two connection pads belonging to the physical communication interface. The system comprises a moveable component preventing the battery to power the card when placed in an initial position. The battery is configured to power the card using a boot protocol different from those specified by ISO/IEC 7816 standard as soon as the moveable component is placed in a triggering position. The card is configured to perform a detection that the physical communication interface is powered using said boot protocol and to start a predefined treatment only in case of successful detection.

Advantageously, the moveable component may have two parts: a first part whose shape is adapted to electrically insulate the two connectors from the two connection pads and a second part providing a grip for a user to grasp to move the component from the initial position to the triggering position.

Advantageously, the battery may be configured to start generation of power energy only when the moveable component is placed in the triggering position.

Advantageously, the battery may comprise a hardware component configured to provide a chemical element (like Oxygen) required to start generation of power energy as soon as the moveable component is placed in the triggering position.

Advantageously, the battery may be removably bonded to the outer surface using an adhesive material that retains adhesion characteristics after removing the battery from the card and allowing the battery to be reattached to the card.

Advantageously, the card may comprise a biometric sensor and the predefined treatment may be an enrolment of biometric data.

Advantageously, the card may comprise a wireless communication interface able to connect a distant device and the predefined treatment may be a pairing of the card with the distant device.

Advantageously, the body of the card may embed a hardware module able to emit a visual signal and the battery may have a shape comprising a cavity arranged such that the visual signal passes through the cavity.

Another object of the present invention is a method for operating a predefined treatment in a card comprising a body and a physical communication interface able to operate according to ISO/IEC 7816 standard. A system comprises the card and a battery. The battery is a bio-battery removably bonded to an outer surface of said body. The battery comprises two connectors placed opposite two connection pads belonging to the physical communication interface. The system comprises a moveable component preventing the battery to power the card when placed in an initial position. The method comprises the steps:
- the battery powers the card using a boot protocol different from those specified by ISO/IEC 7816 standard as soon as the moveable component is placed in a triggering position; and
- the card performs a detection that the physical communication interface is powered using said boot protocol and starts said predefined treatment only in case of successful detection.

Advantageously, the moveable component may have two parts: a first part whose shape is adapted to electrically insulate at least one of said two connectors from said physical communication interface and a second part providing a grip for a user to grasp to move the moveable component from the initial position to the triggering position.

Advantageously, the battery may start generation of power energy only when the moveable component is placed in the triggering position.

Advantageously, the battery may comprise a hardware component configured to provide a chemical element (like Oxygen) required to start generation of power energy and the battery may provide said chemical element as soon as the moveable component is placed in the triggering position.

Advantageously, the card may comprise a biometric sensor and the predefined treatment may be the enrolment of biometric data.

Advantageously, the card may comprise a wireless communication interface able to connect a distant device and the predefined treatment may be the pairing of the card with the distant device.

Advantageously, the wireless communication interface may comply with requirements of Bluetooth Low Energy^{©} specifications.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows a first exemplary flow diagram for processing an operation in a smart card according to an example of the invention;
Fig. 2 shows a diagram of architecture of a card according to an example of the invention;
Fig. 3 shows a set (top view) consisting of a bio-battery and a moveable component according to an example of the invention;
Fig. 4 shows a detail of the body of the card according to an example of the invention;
Fig. 5 shows a set (bottom view) consisting of a bio-battery and a moveable component according to an example of the invention;
Fig. 6 shows a system comprising a card, a bio-battery and a moveable component according to an example of the invention;
Fig. 7 shows a set (top view) consisting of a bio-battery and a moveable component according to an example of the invention;
Fig. 8 shows a system comprising a card, a bio-battery and a moveable component according to an example of the invention;
Fig. 9 shows a set (top view) consisting of a moveable component and a bio-battery with a recess according to an example of the invention; and
Fig. 10 shows a set (top view) consisting of a bio-battery including a moveable component according to an example of the invention.

### (Detailed description of the preferred embodiments)

The invention may apply to any type of card comprising a body having an outer surface. The invention is well suited for smart cards embedding a biometric sensor and comprising a body having a substantially flat outer surface. The invention is well suited for cards that are designed to communicate through a contact protocol. The invention also applies to cards that are designed to communicate through both contact and contactless protocols.

The card may be a payment card, a ticket providing access to a mass transit, an access badge or an identity document (like passport, driving license or identity card) for example.

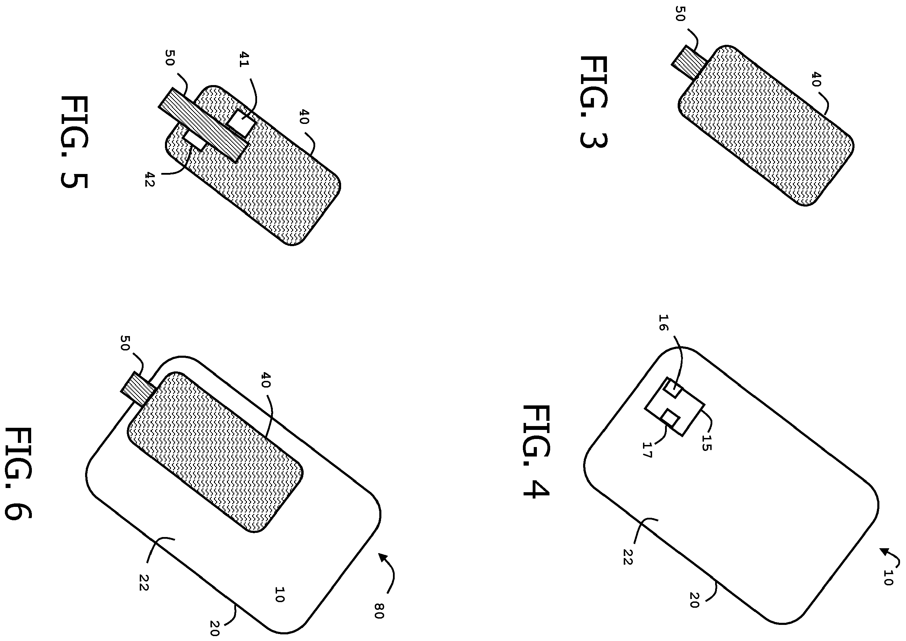

Figure 3 depicts a first exemplary a set (top view) consisting of a battery 40 and a moveable component 50 according to an example of the invention.

The battery 40 is a bio-battery. A bio-battery is an energy-storing unit that contains organic compounds that generate power. Used organic compounds may be glucose for instance. As other types of battery, bio-batteries store energy that can be provided when needed on the form of electrical power.

The bio-battery 40 can be implemented as a paper battery or a sugar battery for instance.

A paper battery is a kind of bio-battery comprising a paper material structure. They contain cellulose and are mainly biodegradable. Usually they are thin and flexible.

A sugar battery is a kind of bio-battery that uses maltodextrin and relies on enzymatic catalysts or use bacteria to convert glucose into energy.

The moveable component 50 is adapted to prevent the battery to power the card when placed in an initial position as shown at Figure 3 where the moveable component 50 is partly masked by the battery.

As depicted at Figure 5, (bottom view of the set of Figure 3), the battery 40 comprises two connectors 41 and 42 intended to power a card to be coupled to the set. In this example, the moveable component 50 is placed in its initial position that prevents an electrical contact between the connector 42 and a connection pad of a card coupled to the battery.

The moveable component can be made of wood, paper, plastic or metal material.

In some embodiments, when the moveable component is designed to create an electrical contact when placed in the triggering position, the moveable component can comprise a part made of an electrically conductive material such as copper.

In some embodiments, when the moveable component is designed to remove the presence of an electrical insulator when placed in the triggering position, the moveable component can comprise a part made of a dielectric material (an electrically non-conductive material) such as a plastic.

Preferably, the moveable component has two parts. A first part has a shape adapted to electrically insulate at least one of the two connectors 41 and 42 from the physical communication interface of a coupled card. A second part provides a grip for a user to grasp to move the moveable component from the initial position to the triggering position.

It should be noted that the triggering position may be defined as any positions different from the initial position.

The battery 40 may have a guide for limiting one or more directions of movement of the moveable component 50.

In some embodiments, the set may be designed to allow the moveable component 50 to be returned to its initial position after it has been moved.

Figure 4 depicts a detail of the body of a smart card according to an example of the invention.

The smart card 10 comprises a body 20 and a physical communication interface 15 able to operate according to contact communication protocols defined by ISO/IEC 7816 standard. (Like T=0 or T=1 protocols for instance). The physical communication interface 15 comprises two connection pads 16 and 17 which may be the VCC (Power supply input) and GND (Ground) pads specified by ISO/IEC 7816-2 standard. Alternatively, the connection pads 16 and 17 which may be any other combination among GND, VCC, I/O, CLK, RST and VPP pads specified by ISO/IEC 7816-2 standard.

The body 20 comprises an outer surface 22 in which the physical communication interface 15 is integrated. In general, the connection pads 16 and 17 are flush parallel to the outer surface 22.

Figure 6 depicts a first exemplary system comprising a card, a bio-battery and a moveable component according to an example of the invention.

The system 80 comprises the smart card 10 (as depicted at Fig. 4) and a set (as depicted at Fig. 3) including the battery 40 and the moveable component 50.

The battery 40 is removably bonded to the outer surface 22 of the card body 20. Preferably, the battery includes a layer of adhesive material on its bottom surface (except for the connectors' area). For instance, the battery can be made as a removable sticker.

In some embodiments, the battery may constitute the main structure (the body) of a sticker.

The battery 40 comprises two connectors (not visible) placed opposite two connection pads 16 and 17 that are masked by the battery 40 at Figure 6.

The battery is adapted to power the card using a specific boot protocol different from those specified by ISO/IEC 7816 standard as soon as the moveable component is placed in a triggering position. The system may be designed to allow only a rectilinear movement of the moveable component 50 (as long as it is mechanically coupled to the other elements of the system 80) or only rotation of the moveable component 50 around a predefined axis.

The card is adapted to perform a detection that its physical communication interface 15 is powered using the specific boot protocol and to start a predefined treatment (action) only in case of successful detection.

Once the predefined treatment has been carried out, the battery (and the moveable component if needed) can be removed from the card (by hand by the user of the card) by carefully peeling it off.

In some embodiments, the battery 40 may be removably bonded to the outer surface 22 using an adhesive material that retains adhesion characteristics after removing the battery from the card. Thus, the card user may reattache the battery 40 to the card 10 if a further action is to be executed by the card 10.

In some embodiments, the card 10 may embed a biometric sensor and the predefined treatment may be a process of enrolment of biometric data. For instance, the card may comprise a fingerprint scanner and the card automatically launches an enrolment sequence upon detection that the physical communication interface is powered using the specific boot protocol.

In some embodiments, the card may comprise a wireless communication interface able to connect a distant device (like a smartphone, a tablet PC, an e-watch or a laptop for instance) and the predefined treatment may be a pairing of the card with the distant device. Such a pairing may comprise a sharing of a secret like a symmetric key for instance. The pairing may comprise an exchange of identifiers so that the distant device registers (in its own memory) the identifier of the card while the card registers (in its own memory) the identifier of the distant device. The wireless communication interface may comply with Bluetooth Low Energy^{©} (BLE) specifications for instance.

In some embodiments, the specific boot protocol provided by the battery can differ from those specified by ISO/IEC 7816 standard in that it uses neither a cold reset nor a warm reset as specified by ISO/IEC 7816-3 standard (Third edition dated 2006-11-01 for instance). The battery may be configured to perform the specific boot protocol by providing no Reset signal on the RST pad of the card. Symmetrically, the card may be configured to recognize that the battery has generated neither a cold reset nor a warm reset as specified by ISO/IEC 7816-3 standard.

In some embodiments, the battery may be configured to perform the specific boot protocol by providing no Clock signal on the CLK pad of the card. Symmetrically, the card may be configured to recognize that the battery has generated no signal on CLK pad of the card.

In some embodiments, the battery may embed a controller designed to handle the specific boot protocol.

Returning to Figure 5, the moveable component 50 may be placed in its initial position so that it partially covers the connector 42. In particular, it covers the area of the connector 42 which is intended to be in contact with one of the connection pads of the card 10. Optionally, the moveable component 50 may fully cover the connector 42. In the embodiment of Figure 5, the battery 40 comprises an energy-storing component and is configured to deliver electrical power to the card as soon as the moveable component is placed in the triggering position.

The moveable component 50 may be made of an insulating material such as plastic, recycled plastic or wood.

In some embodiments, the displacement of the moveable component 50 (from the initial position to the triggering position) may trigger activation of a bistable element placed between at least one of the connectors 41, 42 and the physical communication interface 15 of the card 10. The bistable element may be (electrically) insulating when in its initial state and (electrically) conductive when activated in a conductive state.

The bistable element may be mechanically bistable (like a small switch) so that once pressed, it connects the two contacts facing each other. This operation could be reversible to cut off the power supply.

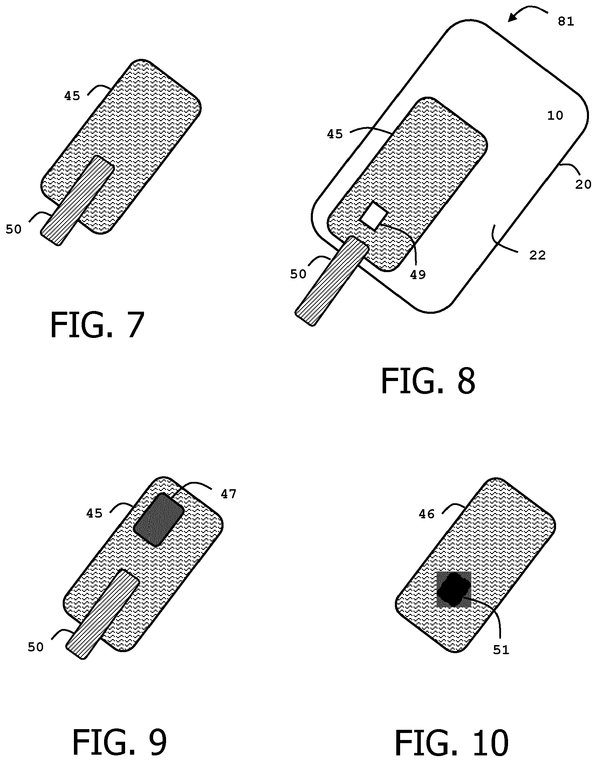

Figure 10 depicts an exemplary set (top view) comprising a battery 46 which includes a moveable component 51.

In some embodiments, the battery 46 may comprise a moveable component 51 which is said moveable because at least a part of the component 51 can be changed from an initial position to another position (i.e. the triggering position) relative to the battery 46.

In some embodiments, the moveable component 51 may be invisible (because hidden inside the battery) and an indication may be marked on the exterior surface of the battery 46 to indicate the location of the moveable component 51.

In some embodiments, the moveable component 51 may be visible on the outer surface of the battery 46.

In some embodiments, the displacement of the moveable component 51 (from the initial position to the triggering position) may trigger activation of a deformable (or breakable) element placed between at least one of the connectors 41, 42 and the physical communication interface 15 of the card 10. The deformable element may be (electrically) insulating when in its initial state and (electrically) conductive when activated in a conductive state.

In some embodiments, the deformable element, such as a conductive tab, could be activated either by bending or by manual modification of the external shape of the moveable component 51.

In some embodiments, the breakable element, once broken, could remove an electrical barrier, allowing the activation of the power supply of the card.

In some embodiments, the battery may be configured to start generating electrical power only when the moveable component has been is placed in a triggering position.

Figure 7 depicts an exemplary set (top view) consisting of a battery 45 and a moveable component 50 placed in its initial position according to such an embodiment. The moveable component 50 is located above the upper surface of the battery 45. The battery 45 comprises a hardware component 49 configured to provide a chemical element (like Oxygen) required to start generation of power energy as soon as the moveable component is placed in the triggering position. For example, the opening of a hole allowing the passage of oxygen from the ambient air could allow enzymes to produce the required electrical energy.

In some embodiments, when the mixing of two chemical elements is necessary for the production of energy, the system could be adapted to cause the mixing of the two elements in response to a mechanical manual intervention of the user.

As shown at Figure 7, the hardware component 49 is masked by the moveable component 50 since the moveable component is placed in its initial position.

Figure 8 depicts an exemplary system 81 comprising a card 10 (similar to the one of Figure 4), a bio-battery 45 (similar to the one of Figure 7) and a moveable component 50.

As shown at Figure 8, the hardware component 49 is visible since the moveable component 50 is now placed in the triggering position.

The battery 45 may be configured to deliver electrical power to the card as soon as the generation of electrical energy starts into the battery.

Figure 9 depicts an exemplary set (top view) which is a variant of exemplary set presented at Figure 7. This set consists of a moveable component 50 and a battery 45 with a recess 47.

In some embodiments, the body 20 of the card may embed a hardware module able to emit a visual signal. The battery may have a shape comprising a through cavity 47 (I.e. a hole going through from one edge to the opposite edge.) arranged such that the visual signal passes through the cavity when the battery is mechanically coupled to the card (I.e. stuck onto the outer surface 22 of the card body 20). The hardware module may generate or reflect the visual signal. The hardware module may be a LED or a dynamic displaying system (like a display) for instance.

Such a visual signal may be controlled by the card to warn the card user of the progress of the predefined treatment or to give details of certain of intermediate stages of the predefined treatment.

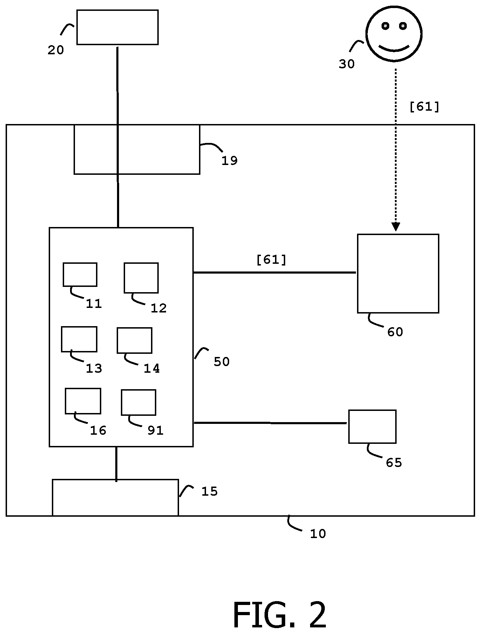

Figure 2 depicts a diagram of architecture of a card according to an example of the invention.

In this example, the card 10 is a payment smart card allocated to a user 30.

The card 10 comprises a secure chip 50 (also called secure element) and a fingerprint sensor 60 connected to the secure chip. The card 10 comprises a communication interface 19 which is designed to exchange data with outside in contactless mode. For instance, the communication interface 19 may be compliant with Bluetooth Low Energy^{©}, Wi-Fi or NFC (Near Field Communication) technology. The communication interface 19 is linked to the secure element 50.

The secure chip 50 comprises a processor and a non-volatile memory (not shown). The non-volatile memory stores an operating system 11 that includes software instructions that are executed by the processor to perform the features of the secure chip.

In the example of Figure 2, the card 10 is coupled to a reader device 20 which may be a smartphone or a laptop. The secure element 50 is based on a conventional smart card chip with additional features. The secure element 50 may be able to contribute to a banking transaction with an external machine. For instance, the transaction may be a payment transaction or cash withdrawal.

The card 10 comprises a physical communication interface 15 able to communicate and operate according to ISO/IEC 7816 standard.

The secure element 50 comprises a Boot engine 12 configured to perform a detection that the physical communication interface 15 is powered using a specific boot protocol different from those specified by ISO/IEC 7816 and to start a predefined treatment only in case of successful detection.

The secure element 50 comprises program instructions 14 intended to be executed by the processor of the secure element to perform the predefined treatment.

The secure element 50 may comprise a biometric algorithm 16 (matching algorithm) aiming at comparing a pre-registered reference biometric data 91 (biometric pattern) with a biometric data captured by the sensor 60.

The secure element 50 may comprise an enrollment engine 13 able to perform an enrolment of biometric data 61 captured by the sensor 60. The secure element 50 may be configured to automatically start the biometric data enrolment (as predefined treatment) as soon as it detects that the physical communication interface 15 is powered using a specific boot protocol different from those specified by ISO/IEC 7816.

The card comprises a hardware module 65 able to emit a visual signal and may be configured to provide a feedback directly to the cardholder 30 using the hardware module 65. The hardware module 65 may be a display or a set of one or more light sources based on LED (light-emitting diode) for instance.

It should be noted that the invention may also apply to cards devoid of biometric sensor 60, contactless communication interface 19 or hardware module 65.

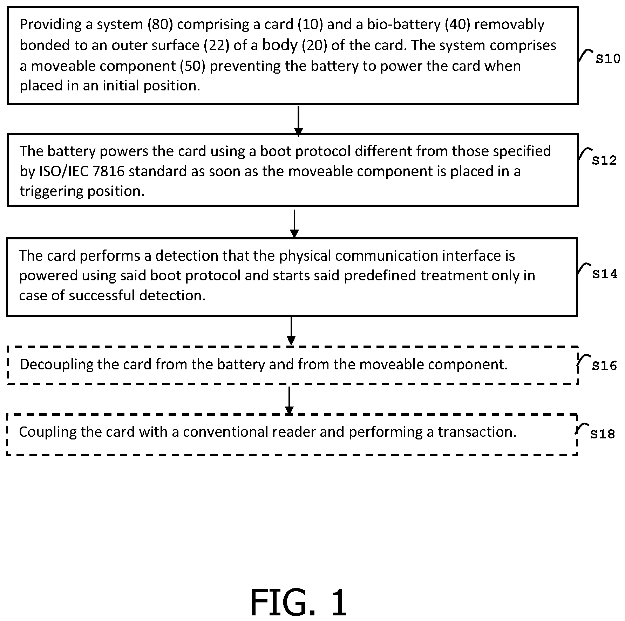

Figure 1 depicts an exemplary flow diagram for managing an operation in a smart card according to an example of the invention.

In this example, the card 10 is a biometric payment card intended to be used by its associated user (i.e. bank customer) for payment or cash withdrawal.

The payment card 10 comprises a body 20 and a physical communication interface 15 able to operate according to ISO/IEC 7816 standard.

In a preliminary step S10, a system 80 comprising the card 10, a battery 40 and a moveable component 50 is provided to the card user. The battery is a bio-battery that is removably bonded to an outer surface 22 of the card body 20. The battery comprises two connectors placed opposite two connection pads belonging to the physical communication interface 15 of the card. The moveable component 50 is placed in an initial position where it prevents the battery to power the card.

In some embodiments, the battery (and moveable component 50) the can be fixed to the card during the manufacturing step, before the issuance of the card.

At step S12, the user places the moveable component 50 in a triggering position different from its initial position. The movement of moveable component triggers the supply of electrical energy to the card by the battery. The battery powers the card using a specific boot protocol different from those specified by ISO/IEC 7816 standard.

At step S14, the card performs a detection that its physical communication interface is powered using the specific boot protocol and starts a predefined treatment only in case of successful detection.

In some embodiments, the automatically started predefined treatment may be the enrolment of biometric data provided that the card embeds a biometric sensor.

In some embodiments, the automatically started predefined treatment may be the pairing of the card with another wireless device provided that the card comprises a wireless communication interface.

In some embodiments, the automatically started predefined treatment may be the execution of a set of internal operations that finalizes the personalization phase of the card. Such an execution can allow the content of data packets previously loaded in a compressed, enciphered or bulk form to be analysed and stored correctly according to their nature into the card. Such a predefined treatment can allow to save time during the loading of data in the card carried out by a personalization machine.

In a further step S16, the user may separate the card from the battery (and from the moveable component if it is still coupled to the card). At this stage, the card can now be used as a conventional card. For instance, the card may be inserted in a Point-Of-Sale terminal to perform a payment transaction at step S18.

Thanks to some embodiments of the invention, it is possible to allow a user to choose when the card executes a predefined treatment.

Thanks to some embodiments of the invention, the user can easily dispose of the battery by throwing it in an appropriate trash can. There is no need to provide a recovery infrastructure that is generally complex and expensive to deploy.

The invention is not limited to the described embodiments or examples. In particular, the described features of the presented embodiments may be combined as can be understood by those skilled in the art.

The invention is not limited to payment smart cards and may apply to any cards requiring processing of internal treatments.

Although examples of the invention have been mainly provided in the banking domain, the invention also applies to other domains. For example, the card may provide access to a physical building, room or area.

## Claims

1. A system (80, 81) comprising a card (10) and a battery (40, 45), the card comprising a body (20) and a physical communication interface (15) able to operate according to ISO/IEC 7816 standard,
wherein the battery is a bio-battery removably bonded to an outer surface (22) of said body,
wherein the battery comprises two connectors (41, 42) placed opposite two connection pads (16, 17) belonging to the physical communication interface,
wherein the system comprises a moveable component (50) preventing the battery to power the card when placed in an initial position,
wherein the battery is configured to power the card using a boot protocol different from those specified by ISO/IEC 7816 standard as soon as the moveable component is placed in a triggering position,
wherein the card is configured to perform a detection that the physical communication interface is powered using said boot protocol and to start a predefined treatment only in case of successful detection.

2. The system according to claim 1, wherein the moveable component has two parts: a first part whose shape is adapted to electrically insulate the two connectors from the two connection pads and a second part providing a grip for a user to grasp to move the component from the initial position to the triggering position.

3. The system according to claim 1, wherein the battery (45) is configured to start generation of power energy only when the moveable component is placed in the triggering position.

4. The system according to claim 3, wherein the battery comprises a hardware component (49) configured to provide a chemical element required to start generation of power energy as soon as the moveable component is placed in the triggering position.

5. The system according to claim 1, wherein the battery is removably bonded to the outer surface using an adhesive material that retains adhesion characteristics after removing the battery from the card and allowing the battery to be reattached to the card.

6. The system according to claim 1, wherein the card comprises a biometric sensor (60) and the predefined treatment is an enrolment of biometric data.

7. The system according to claim 1, wherein the card comprises a wireless communication interface (19) able to connect a distant device (20) and the predefined treatment is a pairing of the card with the distant device.

8. The system according to claim 1, wherein the body of the card embeds a hardware module (65) able to emit a visual signal and wherein the battery has a shape comprising a cavity (47) arranged such that the visual signal passes through the cavity.

9. A method for operating a predefined treatment in a card (10) comprising a body (20) and a physical communication interface (15) able to operate according to ISO/IEC 7816 standard, a system (80, 81) comprising said card and a battery (40, 45),
wherein the battery is a bio-battery removably bonded to an outer surface (22) of said body,
wherein the battery comprises two connectors (41, 42) placed opposite two connection pads (16, 17) belonging to the physical communication interface,
wherein the system comprises a moveable component (50) preventing the battery to power the card when placed in an initial position,
wherein the method comprises the steps:
- the battery powers the card using a boot protocol different from those specified by ISO/IEC 7816 standard as soon as the moveable component is placed in a triggering position; and
- the card performs a detection that the physical communication interface is powered using said boot protocol and starts said predefined treatment only in case of successful detection.

10. The method according to claim 9, wherein the moveable component has two parts: a first part whose shape is adapted to electrically insulate at least one of said two connectors from said physical communication interface (15) and a second part providing a grip for a user to grasp to move the moveable component from the initial position to the triggering position.

11. The method according to claim 9, wherein the battery (45) starts generation of power energy only when the moveable component is placed in the triggering position.

12. The method according to claim 9, wherein the battery comprises a hardware component (49) configured to provide a chemical element required to start generation of power energy and wherein the battery provides said chemical element as soon as the moveable component is placed in the triggering position.

13. The method according to claim 9, wherein the card comprises a biometric sensor (60) and the predefined treatment is an enrolment of biometric data.

14. The method according to claim 9, wherein the card comprises a wireless communication interface (19) able to connect a distant device (20) and the predefined treatment is a pairing of the card with the distant device.

15. The method according to claim 9, wherein the wireless communication interface (19) complies with requirements of Bluetooth Low Energy^{©} specifications.
